# EUROPÄISCHE PATENTANMELDUNG

(11) **EP 2 555 096 A1**
(43) Veröffentlichungstag der Anmeldung: **06.02.2013**
(21) Anmeldenummer: 11176083.1
(22) Anmeldetag: 01.08.2011
(51) Int. Cl.: G06F 3/048, G05B 19/10, G05B 19/409

(54) **Verfahren zur Vorgabe von Sollwerten**

(71) Anmelder: SIEMENS AKTIENGESELLSCHAFT, 80333 München (DE)
(72) Erfinder: Jöhnßen, Oliver, 91058 Erlangen (DE); Zintel, Andreas, 90478 Nürnberg (DE)

(57) **Zusammenfassung**

Die Erfindung betrifft ein Verfahren zur Vorgabe von Sollwerten für eine Steuerung der Automatisierungstechnik, wobei auf einem berührungsempfindlichen Bedien- und Beobachtungsgerät (1) ein Bedienelement (2) dargestellt wird, mit den Schritten:
- Heranführen eines Bedienobjektes (3) an das Bedienelement (2),
- Bewegen des Bedienobjektes (3) innerhalb eines Wirkbereiches (4) des Bedienelementes (2),
- Auswerten einer Bewegungsrichtung (5) und einer zurückgelegten Strecke des Bedienobjektes (3), wobei in Abhängigkeit der Bewegungsrichtung (5) der Sollwert erhöht oder erniedrigt wird und in Abhängigkeit von einer Streckenlänge für einen Betrag der Erhöhung oder der Erniedrigung ein Multiplikator ermittelt wird, welcher mit einer Schrittweite multipliziert wird,
**dadurch gekennzeichnet**, dass das
- berührungsempfindliche Bedien- und Beobachtungsgerät (1) mit einem Berührungssensor betrieben wird, welcher dafür ausgelegt ist mehrfach Berührungen zu erkennen, wobei zusätzlich ausgewertet wird, ob an das Bedienelement (2) mehr als ein Bedienobjekt (3) herangeführt ist, und
- eine Anzahl an herangeführten Bedienobjekten (3a,3b,3c) ausgewertet wird, wobei in Abhängigkeit der Anzahl eine Skalierung und damit die Schrittweite angepasst wird.

## Beschreibung

Die Erfindung betrifft ein Verfahren zur Vorgabe von Sollwerten für eine Steuerung der Automatisierungstechnik, wobei auf einem berührungsempfindlichen Bedien- und Beobachtungsgerät ein Bedienelement dargestellt wird, mit den Schritten:
- Heranführen eines Bedienobjektes an das Bedienelement,
- Bewegen des Bedienobjektes innerhalb eines Wirkbereiches des Bedienelementes,
- Auswerten einer Bewegungsrichtung und einer zurückgelegten Strecke des Bedienobjektes, wobei in Abhängigkeit der Bewegungsrichtung der Sollwert erhöht oder erniedrigt wird und in Abhängigkeit von einer Streckenlänge für einen Betrag der Erhöhung oder der Erniedrigung ein Multiplikator ermittelt wird, welcher mit einer Schrittweite multipliziert wird.

Eine Manipulation oder eine Vorgabe von Werten, insbesondere Sollwerten, für Maschinen oder industrielle Anlagen wird zum Teil mit Potentiometern durchgeführt, wobei unter einem Potentiometer ein hardwaremäßiges Regelungsbauteil zu verstehen ist. Ein Nachteil dieser hardwaremäßigen Regelungsbauteile ist es, dass diese in der Regel mechanische Teile sind, welche einem Verschleiß unterliegen oder durch z.B. mechanische Einwirkungen abbrechen können und funktionsuntüchtig werden. Auch kann gegebenenfalls durch Verschleiß und/oder Alterung z.B. eine Undichtigkeit an einer Achse, welche durch ein Gerätegehäuse dringt, auftreten. Auch benötigen diese zusätzlichen Hardwarebauteile zusätzlichen Platz an einem eigentlichen Bediengerät, sie müssen am oder im Bediengerät eingebaut sein. Des Weiteren können diese Bedienelemente leicht versehentlich ausgelöst werden, z.B. das versehentliche Vorbeistreichen an einem vorstehenden Potentiometerknopf. Als weiterer Nachteil wird angesehen, dass eine Skalierung eines Hardwarepotentiometers nicht verändert werden kann. Soll ein Sollwert schnell oder in großen Schritten verändert werden, muss das Potentiometer entsprechend schnell und um entsprechend viele Umdrehungen gedreht werden. Diese Art der Bedienung ist unpraktisch.

Mit einem berührungsempfindlichen Anzeigegerät könnte man bereits auf zusätzliche Hardwareelemente verzichten. So wurde bereits ein Hardware-Potentiometer auf einer Softwarebasis nachgebildet und auf einem Display des Anzeigegerätes dargestellt. Um jedoch einen Wert schnell und in großen Schritten zu ändern, muss sehr schnell und sehr lange an dem softwaremäßig nachgebildeten Potentiometer gedreht werden. Eine Erleichterung bei der Bedienung von bekannten auf Softwarebasis nachgebildeten Potentiometern ist insofern bekannt, dass sich beim schnellen Drehen des nachgebildeten Potentiometers die Skalierung der Einstellschritte verändert, dass heißt die Schrittweite vergrößert sich. Der Nachteil bei dieser Lösung ist es, dass sich beim versehentlichen zu schnellem Drehen, die Werte zu schnell verändern. Für einen Bediener ist es dabei nicht mehr ersichtlich bei welcher Drehgeschwindigkeit die Werte in welcher Schrittweise verändert werden. Dies kann gegebenenfalls zu einer Fehlbedienung der Maschine führen, wobei diese oder Teile dieser Maschine zerstört werden können.

Es ist daher die Aufgabe der vorliegenden Erfindung die Bedienung eines Bedienelementes an einem Bedien- und/oder Beobachtungsgerät zu vereinfachen.

Die Aufgabe wird Verfahrensgemäß durch die Merkmalskombination des Anspruchs 1 gelöst. Dabei wird das berührungsempfindliche Bedien- und Beobachtungsgerät mit einem Berührungssensor betrieben, welcher dazu ausgelegt ist, Mehrfachberührungen zu erkennen, wobei zusätzlich ausgewertet wird, ob an das Bedienelement mehr als ein Bedienobjekt herangeführt ist, und eine Anzahl an herangeführten Bedienobjekten ausgewertet wird, wobei in Abhängigkeit der Anzahl eine Skalierung und damit die Schrittweite angepasst wird.

Bei dem Verfahren wird vorteilhafter Weise als Bedienobjekt bzw. als Bedienobjekte ein Finger bzw. mehrere Finger einer menschlichen Hand verwendet.

Um beispielsweise einen Potentiometer möglichst naturgetreu nachzubilden wird als Bedienelement ein kreisringförmiges Gebilde dargestellt, wobei ein erster Kreisring einen ersten Durchmesser aufweist und ein zweiter Kreisring einen zweiten Durchmesser aufweist, wobei der zweite Durchmesser größer gewählt wird als der erste Durchmesser, und die dadurch gebildete Kreisringfläche als Wirkbereich genutzt wird.

Vorzugsweise werden bei Aufliegen der Bedienobjekte auf der Oberfläche des Berührungssensors und innerhalb des Wirkbereiches Berührungspunkte gebildet und um diese Berührungspunkte wird ein optisches Rückmeldeobjekt gebildet. Dieses optische Rückmeldeobjekt wird vorzugsweise durch ein hinter dem transparenten Berührungssensor angeordnetes Display dargestellt.

Vorteilhafter Weise wird als Bedienobjekt eine Nachbildung eines Potentiometers mit einer ringförmig angeordneten außen liegenden Skala eingesetzt.

Zusammenfassend kann die Erfindung auch mit anderen Worten beschrieben werden, ein in einer Software nachgebildetes berührungssensitives Bedienelement z.B. ein Potentiometer, wird durch die Verwendung eines Multitouch-Bediengerätes so verbessert, dass beim Drehen des Potentiometers mit z.B. einem Finger, also einem ersten Bedienobjekt, durch eine weitere Berührung eines oder mehrerer weiterer Berührpunkte z.B. mit einem zusätzlichen zweiten Finger oder zusätzlichen dritten Finger, die jeweilige Einstellgeschwindigkeit/Skalierung des nachgebildeten Potentiometers verändert wird, d.h., die Schrittweite kann durch die Anzahl der Finger definiert gewählt werden. Weiterhin ändert sich bei einem Erkennen einer weiteren Berührung automatisch die dem Bedienelement zugehörige grafisch dargestellte Skalierung. Somit kann ein Bediener sofort Erkennen, in welchen Schrittweiten er den Wert verändern kann. Dreht ein Bediener das nachgebildete Potentiometer mit einem Finger, so verändern sich die Werte in einer ersten Skalierungsgröße. Dreht der Bediener das Potentiometer mit zwei Fingern oder berührt der Bediener beim Drehen des Potentiometers mit einem zweiten Finger die berührungssensitive Oberfläche, so verändern sich die Werte in einer anderen zweiten Skalierungsgröße, d.h. die Werte ändern sich schneller als zuvor. Bei einer Verwendung eines dritten oder z.B. vierten Fingers kann die Skalierung entsprechend weiterhin angepasst werden.

Die Zeichnung zeigt ein Ausführungsbeispiel der Erfindung, es zeigt die
- FIG 1: eine Bedienung eines Bedienelementes mit einer ersten Schrittweite,
- FIG 2: eine Bedienung des Bedienelementes mit einer zweiten Schrittweite, und
- FIG 3: eine Bedienung des Bedienelementes mit einer dritten Schrittweite.

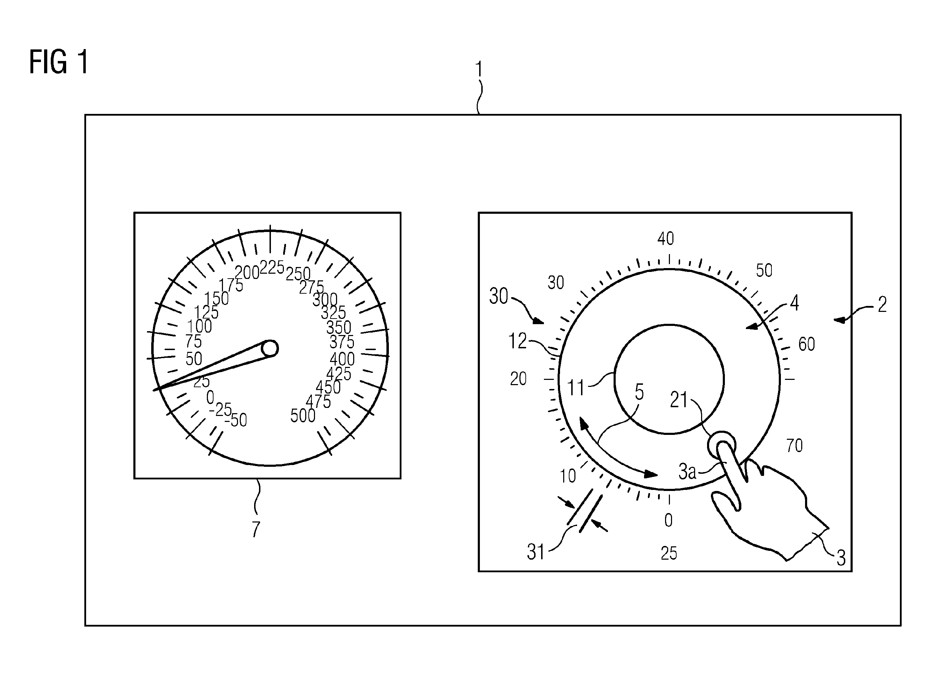

Gemäß FIG 1 ist ein Bedien- und Beobachtungsgerät 1 dargestellt. Dieses Bedien- und Beobachtungsgerät 1 ist beispielsweise als ein industrielles Touchscreen Panel ausgestaltet. Das Bedien- und Beobachtungsgerät 1 weist dazu ein LCD-Display auf und vor dem LCD-Display ist ein berührungssensitiver Sensor angeordnet. Ein Potentiometer ist softwaremäßig nachgebildet und wird als ein Bedienelement 2 dargestellt. Das Bedienelement 2 weist einen ersten Kreisring 11 und einen zweiten Kreisring 12 auf, wobei der erste Kreisring 11 einen ersten Durchmesser aufweist und der zweite Kreisring 12 einen zweiten Durchmesser aufweist, wobei der zweite Durchmesser größer gewählt ist als der erste Durchmesser. Eine dadurch entstehende Kreisringfläche wird als Wirkbereich 4 genutzt. Wirkbereich 4 bedeutet hierbei, dass die Fläche die durch den Wirkbereich 4 beschrieben wird, eine aktive Fläche ist, dass bedeutet, dass nur Berührungen von Bedienobjekten 3 innerhalb dieser Fläche ausgewertet werden. Ringförmig um den zweiten Kreisring 12 ist eine Skala 30 angeordnet. Die Skala 30 in der Darstellung gemäß FIG 1 weist eine erste Schrittweite 31 auf. Diese erste Schrittweite 31 entspricht einer Wertigkeit von 1. Wird nun ein Bedienobjekt 3 an das Bedienelement 2 derart herangeführt, dass ein erstes Bedienobjekt 3a die Oberfläche des berührungsempfindlichen Sensors berührt, so bildet sich ein erster Berührpunkt und um diesen ersten Berührpunkt wird ein erstes Rückmeldeobjekt 21 gebildet. Unter der Annahme, dass das erste Bedienobjekt 3a der Zeigefinger einer menschlichen Hand ist, kann ein Bediener mit seinem Zeigefinger nun eine Sollwertveränderung mit einer Bewegungsrichtung 5 vornehmen, bewegt er seinen Finger beispielsweise mit dem Uhrzeigersinn so folgt daraus eine Sollwerterhöhung, bewegt er seinen Finger entgegen dem Uhrzeigersinn, so folgt daraus eine Sollwerterniedrigung jeweils in den Schritten der ersten Schrittweite 31.

Links neben dem Bedienelement 2 ist zur Kontrolle der Sollwertveränderung ein Sollwertanzeigeobjekt 7 dargestellt. Entsprechend der Sollwertveränderung mittels der Bewegungsrichtung 5 wird sich der Zeiger des Sollwertanzeigeobjektes 7 verändern.

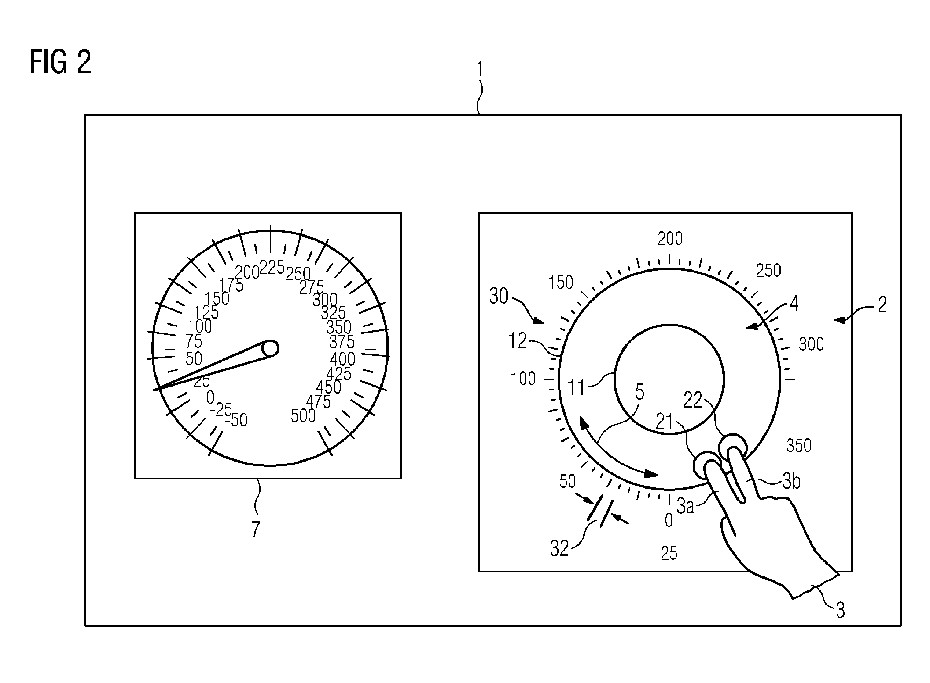

Gemäß FIG 2 ist das aus FIG 1 bekannte Bedien- und Beobachtungsgerät 1 dargestellt. Allerdings wird jetzt das Bedienverfahren für eine Bedienung mit zwei Fingern beschrieben. Auf den Wirkbereich 4 des Bedienelementes 2 wirken nun das erste Bedienobjekt 3a und ein zweites Bedienobjekt 3b, wobei das erste Bedienobjekt 3a der Zeigefinger und das zweite Bedienobjekt 3b der Mittelfinger einer menschlichen Hand eines Maschinenbedieners ist. Da nun durch das weitere zweite Bedienobjekt 3b also dem Mittelfinger ein weiterer Berührpunkt innerhalb des Wirkbereiches 4 geschaffen wurde, wird um diesen weiteren Berührpunkt ein zweites Rückmeldeobjekt 22 angezeigt. Da verfahrensgemäß nun zwei Berührpunkte erkannt wurden, ändert sich die Skala 30, welche zuvor gemäß FIG 1 eine Aufteilung von 0 bis 100 mit einer ersten Schrittweite 31 hatte, in eine Skala 30 mit einer Aufteilung von 0 bis 500 mit einer zweiten Schrittweite 32, welche der Wertigkeit 5 entspricht. Dadurch, dass der Bediener das Bedienelement 2 nur mit zwei Fingern bedient, wird ihm sofort eine veränderte Skala mit einer veränderten Schrittweite, nämlich der zweiten Schrittweite 32 angezeigt. Jetzt weis der Bediener, dass wenn er eine Bedienung in Bewegungsrichtung 5 ausführt, nunmehr die Sollwertänderung in 5er-Schritten vollzogen wird.

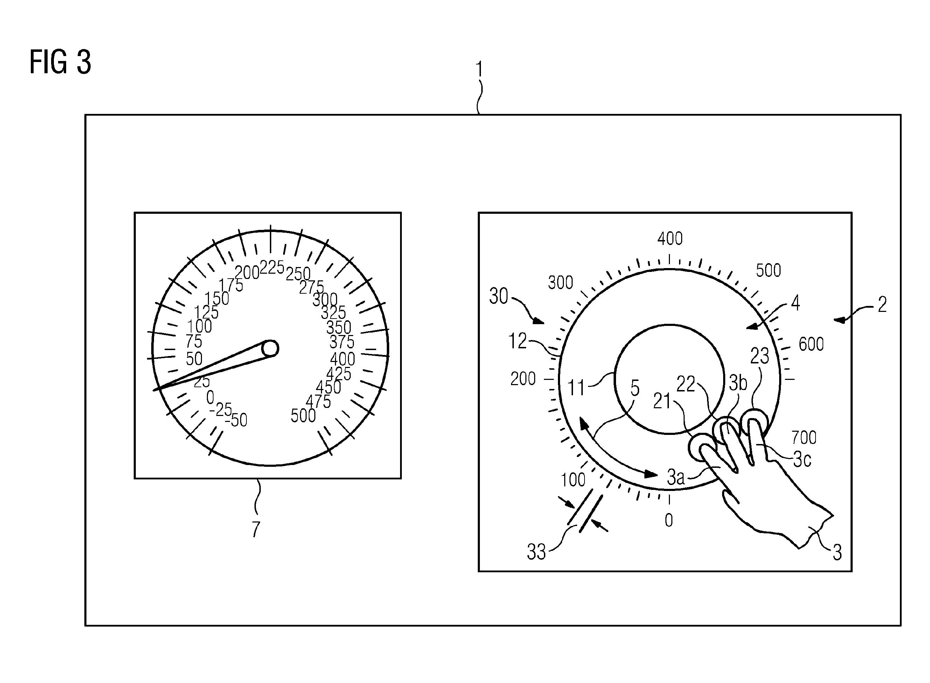

Gemäß FIG 3 ist das Bedien- und Beobachtungsgerät 1 für eine Bedienhandlung mit dem ersten Bedienobjekt 3a, dem zweiten Bedienobjekt 3b und einem weiteren dritten Bedienobjekt 3c dargestellt. Am Beispiel der Bedienung mit einer menschlichen Hand berührt nun der Bediener mit seinem Zeigefinger, seinen Mittelfinger und seinem Ringfinger den Wirkbereich 4 des Bedienelementes 2. Durch diese Bedienung entstehen drei Berührpunkte, welche durch das erste Rückmeldeobjekt 21, das zweite Rückmeldeobjekt 22 und ein drittes Rückmeldeobjekt 23 angezeigt werden. Mit der Bedienung des dritten Fingers wird nunmehr wiederum die Skala 30 automatisch mit einer weiteren dritten Schrittweite 33 angepasst. Die Schrittweite hat nunmehr die Wertigkeit 10 und die Skala 30 erstreckt sich von 0 bis 1000. Jegliche Bewegung in Bewegungsrichtung 5 des Bedieners mit seinen drei Fingern führt nun zu einer Sollwertänderung in Zehnerschritten.

Auch könnte eine weitere Schrittweite des nachgebildeten Potentiometers über zusätzliche am Anzeigegerät projektierte Kontrollbuttons verändert werden. Dieser zusätzliche Kontrollbutton müsste dann allerdings vom Bediener des nachgebildeten Potentiometers synchron gedrückt gehalten werden.

Als weitere Vorteile ergeben sich eine Reduzierung der Produktionskosten für Bedien- und Beobachtungsgeräte, da zusätzliche Hardwarekomponenten, wie z.B. Potentiometer, entfallen können. Eine zusätzliche Typprüfung oder Approbation von hardwaremäßigen Potentiometern kann ebenfalls entfallen. Für derartig hergestellte Bedien- und Beobachtungsgeräte ergibt sich eine Gewichtsreduzierung der Geräte, da die zusätzliche Hardware entfällt. Mit derartig nachgebildeten Potentiometern erhält man einen Schutz gegen versehentliches Auslösen, da durch die softwaremäßig nachgebildeten Potentiometer keine Teile mehr wie z.B. eine Potentiometerachse hervorstehen können. Die Bedienung der softwaremäßig nachgebildeten Potentiometer ist quasi verschleißfrei. Durch diese nachgebildeten softwaremäßigen Potentiometer und die Anwendung des beschriebenen Verfahrens erhält man eine effiziente und intuitive Bedienung.

## Patentansprüche

1. Verfahren zur Vorgabe von Sollwerten für eine Steuerung der Automatisierungstechnik, wobei auf einem berührungsempfindlichen Bedien- und Beobachtungsgerät (1) ein Bedienelement (2) dargestellt wird, mit den Schritten:
- Heranführen eines Bedienobjektes (3) an das Bedienelement (2),
- Bewegen des Bedienobjektes (3) innerhalb eines Wirkbereiches (4) des Bedienelementes (2),
- Auswerten einer Bewegungsrichtung (5) und einer zurückgelegten Strecke des Bedienobjektes (3), wobei in Abhängigkeit der Bewegungsrichtung (5) der Sollwert erhöht oder erniedrigt wird und in Abhängigkeit von einer Streckenlänge für einen Betrag der Erhöhung oder der Erniedrigung ein Multiplikator ermittelt wird, welcher mit einer Schrittweite multipliziert wird,
**dadurch gekennzeichnet, dass** das
- berührungsempfindliche Bedien- und Beobachtungsgerät (1) mit einem Berührungssensor betrieben wird, welcher dafür ausgelegt ist mehrfach Berührungen zu erkennen, wobei zusätzlich ausgewertet wird, ob an das Bedienelement (2) mehr als ein Bedienobjekt (3) herangeführt ist, und
- eine Anzahl an herangeführten Bedienobjekten (3a,3b,3c) ausgewertet wird, wobei in Abhängigkeit der Anzahl eine Skalierung und damit die Schrittweite angepasst wird.

2. Verfahren nach Anspruch 1, wobei als Bedienobjekt (3) bzw. als Bedienobjekte (3a,3b,3c) ein Finger bzw. mehrere Finger einer menschlichen Hand verwendet wird bzw. werden.

3. Verfahren nach Anspruch 1 oder 2, wobei als Bedienelement (2) ein Kreisringförmiges Gebilde dargestellt wird, wobei ein erster Kreisring (11) einen ersten Durchmesser aufweist und ein zweiter Kreisring (12) einen zweiten Durchmesser auf weist, wobei der zweite Durchmesser größer gewählt wird als der erste Durchmesser, und die dadurch gebildete Kreisringfläche als Wirkbereich (4) genutzt wird.

4. Verfahren nach einem der Ansprüche 1 bis 3, wobei bei Aufliegen der Bedienobjekte (3) auf der Oberfläche des Berührungssensor und innerhalb des Wirkbereiches Berührpunkte gebildet werden und um diese Berührpunkte ein optisches Rückmeldeobjekt (21,22,23) gebildet wird.

5. Verfahren nach einem der Ansprüche 1 bis 4, wobei als Bedienobjekt (3) eine Nachbildung eines Potentiometers mit einer ringförmig angeordneten außen liegenden Skala (30) eingesetzt wird.
